# EUROPEAN PATENT SPECIFICATION

(11) **EP 2 265 672 B1**
(45) Date of publication and mention of the grant of the patent: **28.09.2016**
(21) Application number: 08873893.5
(22) Date of filing: 31.12.2008
(51) Int. Cl.: C08L 69/00

(54) **FLAME-RETARDANT SCRATCH-RESISTANT THERMOPLASTIC RESIN COMPOSITION WITH IMPROVED COMPATIBILITY**
FLAMMWIDRIGE KRATZFESTE THERMOPLASTISCHE HARZZUSAMMENSETZUNG
COMPOSITION DE RÉSINE THERMOPLASTIQUE RÉSISTANTE À LA RAYURE ET IGNIFUGE AVEC UNE COMPATIBILITÉ AMÉLIORÉE

(30) Priority: 14.04.2008 KR 20080034408
(43) Date of publication of application: 29.12.2010
(73) Proprietor: CHEIL INDUSTRIES INC., Gumi-si, Gyeongsangbuk-do 730-710 (KR)
(72) Inventor: KWON, Kee Hae, Gunpo-si Gyeonggi-do 435-050 (KR); KIM, Il Jin, Ansan-si Gyeonggi-do 426-220 (KR)
(74) Representative: Lang, Johannes
(86) International application number: PCT/KR2008/007838
(87) International publication number: WO 2009/128601

(56) References cited:
- WO-A1-2009/078593
- WO-A1-2009/116722
- JP-A- 4 023 856
- JP-A- 4 359 954
- JP-A- 6 313 089
- JP-A- 2001 049 072
- JP-A- 2006 257 284
- DATABASE CA [Online] CHEMICAL ABSTRACTS SERVICE, COLUMBUS, OHIO, US; KODERA, HIDEAKI ET AL: "Compatible polycarbonate blends having good balance of flow and impact strength", XP002688439, retrieved from STN Database accession no. 117:28029 -& JP 4 023856 A (ASAHI CHEMICAL INDUSTRY CO., LTD., JAPAN) 28 January 1992 (1992-01-28)

## Description

### [Technical Field]

The present invention relates to a flame-retardant scratch-resistant thermoplastic resin composition. More particularly, the present invention relates to a flame-retardant scratch-resistant thermoplastic resin composition having improved scratch resistance as well as compatibility by adding a (meth)acrylic polymer resin with a high refractive index to a blend comprising a polycarbonate resin, a rubber modified vinyl graft copolymer and a vinyl copolymer.

### [Background Art]

Generally, thermoplastic resins have lower specific gravity than glasses and metals, and have good physical properties such as moldability and impact resistance. Recently, plastic products have rapidly replaced conventional glass or metal products and have been widely used in electrical and electronic goods, as large and light-weight, and economical products are becoming a widespread trend. Accordingly, as good appearance and functi on of the plastic products have become important when they are used in housings of electrical and electronic goods, there is a need for plastic materials which can provide scratch resistance to the exterior, impact resistance, and flame retardancy against fire.

Polycarbonate resins, in particular, a blend of polycarbonate/vinyl copolymer (PC/ABS) have improved processability while maintaining high notch impact strength so that they have been widely used in the production of heat-emitting large-size injection molding products such as automobile parts, computer housings or office supplies, and the like. Further, polycarbonate resi ns can obtain good flame retardancy even with a non-halogen flame retardant, which allows environmentally friendly use. However, polycarbonate resins have a drawback of poor scratch resistance.

On the other hand, although acrylate resins, especially, polymethylmethacrylate resins have good transparency, weatherability, mechanical strength, surface gloss, adhesive strength, and excellent scratch resistance, they have a disadvantage in that it is hard to obtain impact resistance and flame retardancy.

In order to improve the scratch resistance of plastic products, a hard coating method, which includes the steps of coating a surface of an injection-molded resin with an organic-inorganic hybrid material and curing the organic-inorganic hybrid material on the surface of the resin using heat or ultra violet light, has been conventionally used. However, because the hard coating method requires an additional coating step, the processing time and the manufacturi ng cost increase and it may cause environmental problems. with recent increased interest in environmental protection and reduction of manufacturing costs, there is a need for a non-coated resin which has scratch resistance without using the hard coating method. Also, it is important to develop a resin with good scratch resistance for a housing manufacturing industry.

One attempt to improve both scratch resistance and flame retardancy is to alloy polycarbonate/vinyl copolymer (PC/ABS) and acrylic resin, preferably polymethylmethacrylate (PMMA) to prepare a PC/ABS/PMMA resin. However, the method has a drawback in that it is difficult to obtain high transparency and colorability due to low compatibility and the differences between the refractive indices of the polycarbonate resin and ABS and acryl i c resin. It is also very difficult for an alloy of PC and PMMA to be used in housings of el ectri cal and el ectronic products. Due to the di fferent refractive indices of the PC resin and the PMMA resin (1.59 and 1.49, respectively), the alloy of PC resin and PMMA resin may scatter light. This makes it difficult to provide color with high chroma, and a melt joining line is clearly shown during extrusion.

Korean Patent Publication Laid-open NO. 2004-0079118 discloses a method of lowering the molecular weight of polycarbonate during a kneading process using metal stearic acid ester in order to improve the compatibility between a polycarbonate resin and a (meth)acrylate resin. However, the method has a disadvantage in that a blend of the polycarbonate and the methacrylate resin has significantly low mechanical properties.

Accordingly, the present inventors have developed a flame-retardant scratch-resistant thermoplastic resin composition having good appearance and colorability as well as improved compatibility by appl yi ng a (meth)acryl i c copolymer resin with a high refractive index to a blend comprising a polycarbonate resin, a rubber modified vinyl graft copolymer and a vinyl copolymer thereby reducing the difference between the refractive indices of these resins.

### [Disclosure]

### [Technical Problem]

An object of the present invention is to provide a flame-retardant scratch-resistant thermoplastic resin composition with improved compatibility.

Another object of the present invention is to provide a flame-retardant scratch-resistant thermoplastic resin composition with a good balance of physical properties such as mechanical properties, scratch resistance, flame retardancy and the like.

Another object of the present invention is to provide a flame-retardant scratch-resistant thermoplastic resin composition with good appearance and high colorability by minimizing deterioration of colorability between a polycarbonate resin and a (meth)acrylate resin.

Another object of the present invention is to provide a flame-retardant scratch-resistant thermoplastic resin composition applicable for various articles such as parts of electrical and electronic goods, parts of automobiles, senses, or window glasses, and the like, which need good appearance and high colorability.

other aspects, features and advantages of the present invention will be apparent from the ensuing disclosure and appended claims.

### [Technical solution]

An aspect of the present invention provides a flame-retardant scratch-resistant thermoplastic resin composition comprising (A) 20 to 95 parts by weight of a polycarbonate resin; (B) 1 to 50 parts by weight of a copolymer resin comprising (B1) 10 to 60 % by weight of a rubber modified vinyl graft copolymer resin and (B2) 40 to 90 % by weight of a vinyl copolymer resin; (C) 1 to 50 parts by weight of a (meth)acrylic polymer resin with a refractive index of 1.50 to 1.59; and (D) 0.1 to 40 parts by weight of a flame retardant, per 100 parts by weight of a base resin comprising (A) + (B) + (C) as defined in independent claim 1 and described further below.

In an exemplary embodiment, the flame-retardant scratch-resistant thermoplastic resin composition may comprise (A) 50 to 70 parts by weight of a polycarbonate resin; (B) 10 to 40 parts by weight of a copolymer resin compri si ng (B1) 30 to 60 % by weight of a rubber modi fi ed vinyl graft copolymer resin and (B2) 40 to 70 % by weight of a vinyl copolymer resin; and (C) 5 to 40 parts by weight of a (meth)acrylic polymer resin with a refractive index of 1.50 to 1.59 and (D) 10 to 40 parts by weight of a flame retardant, per 100 parts by weight of a base resin comprising (A) + (B) + (C).

The base resin may further compri se less than about 50 parts by weight of a (meth)acrylic resin (E). In an exemplary embodiment, the (meth)acrylic resin (E) may be used in an amount of 1 to 20 parts by weight.

The rubber modified vinyl graft copolymer resin (B1) is a copolymer or mixtures thereof obtained by graft-polymerizing 50 to 95 % by weight of an aromatic vinyl compound, C₁-C₈ (meth)acrylic acid alkyl ester compound, or mixtures thereof, and 5 to 95 % by weight of vinyl cyanide compound, C₁-C₈ (meth)acrylic acid alkyl ester compound, maleic anhydride, C₁-C₄ alkyl- or phenyl N-substi tuted maleimide, or mi xtures thereof, onto 5 to 95 % by weight of rubbery polymer.

The vinyl copolymer (B2) is a copolymer or mixtures thereof prepared by copolymerizing 50 to 95 % by wei ght of styrene, α-methylstyrene, halogen- or alky-substituted styrene, C₁-C₈ (meth)acrylic acid alkyl ester, C₁-C₈ acrylic acid alkyl ester or mixtures thereof, and 5 to 50 % by weight of a acrylonitrile, methacrylonitrile, maleic anhydride, C₁-C₄ alkyl-or phenyl N-substituted maleimide, or mixtures thereof.

The (meth)acrylic polymer resin (c) is a homopolymer of an aromatic methacrylate or a copolymer of 20 to 100 % by weight of an aromatic methacrylate and 0 to 80 % by weight of a mono-functional unsaturated monomer.

The mono-functional unsaturated monomer may be at least one monomer selected from the group consisting of methacrylic acid ester monomers, acrylic acid ester monomers, acid anhydride monomers, hydroxyl group containing ester monomers, amide monomers, unsaturated nitrile monomers, allyl glycidyl ethers, glycidyl methacrylates, and aromatic vinyl compounds. In an exemplary embodiment, the mono-functional unsaturated monomer may be at least one monomer selected from the group consisting of methacrylic acid ester monomers including methyl methacrylate, ethyl methacrylate, propyl methacrylate, butyl methacrylate,; acrylic acid ester monomers including methyl acrylate,ethyl acrylate, propyl acrylate,butyl acrylate, and 2-ethyl hexyl acrylate; unsaturated carboxylic acid monomers including acrylic acid and methacrylic acid; acid anhydride monomers including maleic anhydride; hydroxyl group containing ester monomers including 2-hydroxyethyl acrylate, 2-hydroxypropyl acrylate, and monoglycerol acrylate; amide monomers including acryl amide and methacryl amide; nitrile monomers including acrylonitrile and methacrylonitrile; allyl glycidyl ethers; glycidyl methacryl ates; and styrenic monomers including styrene and α-methyl styrene.

The (meth)acrylic copolymer resin (C) may have a weight average molecular weight of 5,000 to 300,000.

The flame retardant (D) may be at least one selected from phosphorus-containing flame retardants, halogen-containing flame retardants, and inorganic flame retardants.

The (meth)acrylic resin (E) may be a (co)polymer of C₁-C₈ alkyl (meth)acrylic monomers, or mixtures thereof.

The thermoplastic resin composition may further comprise at least one additive selected from the group consisting of surfactants, nucleating agents, coupling agents, fillers, plasticizers, impact modifiers, antimicrobials, releasing agents, thermal stabilizers, antioxidants, light stabilizers, compatibilizers, inorganic fillers, coloring agents, stabilizers, lubricants, antistatic agents, pigments, dyes, flameproof agents, and the like. These additives may be used alone or in combination with one another.

Another aspect of the present invention provides molded articles produced from the foregoing resin composition.

### [Description of Drawings]

FIG. 1(a) is a transmission electron microscope (TEM) image of a test specimen prepared in Example 5 and FIG. 1(b) is a transmission electron microscope (TEM) image of a test specimen prepared in Comparative Example 3.
FIG. 2(a) is a scratch profile of a test specimen prepared in Example 1 and FIG. 2(b) is a scratch profile of a test specimen prepared in Comparative Example 1.

### [Best Mode]

### (A) Polycarbonate Resin

The polycarbonate resin of the present invention may be prepared by any conventional method well known to those skilled in the art, that is, the polycarbonate resin may be prepared by reacting dihydric phenol compound wi th phosgene in the presence of a catalyst and a mol ecul ar weight controlling agent. Also, the polycarbonate resin may be prepared by transesterification of a carbonate precursor such as dihydric phenol compound and diphenylcarbonate.

The dihydric phenol compound may be a bisphenol compound, preferably 2,2-bis(4-hydroxyphenyl)propane (bisphenol A). The bisphenol A may be partially or totally substituted with other dihydric phenol. In addition to bisphenol A, examples of dihydric phenols may include hydroquinone, 4, 4'-dihydroxydiphenyl, bis(4-hydroxyphenyl)methane, 1,1-bis(4-hydroxyphenyl)cyclohexane, 2,2-bis(3,5-dimethyl-4-hydroxyphenyl)propane, bis(4-hydroxyphenyl)sulfide, bis(4-hydroxyphenyl)sulfone, bis(4-hydroxyphenyl)sulfoxide, bis(4-hydroxyphenyl)ketone, bis(4-hydroxyphenyl)ether, etc., and also include halogenated bisphenol such as 2,2-bis(3,5-dibromo-4-hyroxyphenyl)propane.

However, the dihydric phenol compound applicable for preparing the polycarbonate resin is not limited to the aforementioned compounds, and any dihydric phenol compound may be used.

Furthermore, the polycarbonate resin used in the present invention may be a homopolymer or a copolymer of two or more types of dihydric phenols, or a mixture thereof.

Examples of polycarbonate resin in the present invention may also include, without limitation, linear polycarbonate resin, branched polycarbonate resin, polyester carbonate copolymer resin and the like.

The linear polycarbonate resin may be, wi thout limitation, a bisphenol A-based polycarbonate resin. The branched polycarbonate resin may be prepared by reacti ng poly-functional aromatic compounds such as trimellitic anhydride, trimellitic acid, etc., with dihydric phenol compounds and carbonate precursors. The polyester carbonate copolymer resin may also be prepared, without limitation, by reacting di-functional carboxylic acid with dihydric phenol compounds and carbonate precursors. The linear polycarbonate resin, the branched polycarbonate resin and the polyester carbonate copolymer resin can be used alone or in combination with one another.

In an exemplary embodiment, the polycarbonate resin may have a weight average molecular weight of 10,000 to 200,000g/mol, preferably 15,000 to 80,000g/mol, or 20,000 to 50,000g/mol.

According to the present invention, the polycarbonate resin is used in an amount of 20 to 95 % by weight. within those ranges, good mechanical properties and scratch resi stance can be obtained. In an exemplary embodiment, the polycarbonate resin may be used in an amount of 40 to 90 % by weight, preferably 45 to 80 % by weight. In another exemplary embodiment, the polycarbonate resin may be used in an amount of 51 to 85 % by weight. In another exempl ary embodiment, the polycarbonate resin may be used in an amount of 85 to 95 % by weight. In another exemplary embodiment, the polycarbonate resin may be used in an amount of 30 to 50 % by weight.

### (B) Copolymer Resin

The copolymer resin (B) of the present invention constitutes a base resin, and comprises (B1) 10 to 60 % by weight of a rubber modified vinyl graft copolymer resin and (B2) 40 to 90 % by weight of a vinyl copolymer resin. The copolymer resin n (B) is used in an amount of 1 to 50 parts by weight, preferably 10 to 40 parts by weight, more preferably 15 to 30 parts by weight in the base resin.

### (B1) Rubber modified vinyl graft copolymer

The rubber modified vinyl graft copolymer according to the present invention is a copolymer or mixtures thereof obtained by graft-polymerizing 50 to 95 % by weight of an aromatic vinyl compound, C₁-C₈ (meth)acrylic acid alkyl ester compound, or mixtures thereof, and 5 to 95 % by weight of vinyl cyanide compound, C₁-C₈ (meth)acrylic acid alkyl ester compound, maleic anhydride, C₁-C₄ alkyl- or phenyl N-substituted maleimide, or mixtures thereof, onto 5 to 95 % by weight of rubbery polymer.

The C₁-C₈ methacrylic acid alkyl ester or the C₁-C₈ acrylic acid alkyl ester can be prepared by the reaction of a monohydric alcohol containing 1 to 8 carbon atoms with an acrylic acid or a methacrylic acid respectively. Examples of suitable acid alkyl esters include methacryl i c acid methyl ester, methacrylic acid ethyl ester, methacrylic acid propyl ester, acrylic acid methyl ester, acrylic acid ethyl ester, acrylic acid propyl ester, and the like.

The rubbery polymer includes butadiene rubber, ethylene/propylene rubber, styrene/butadiene rubber, acrylonitrile/butadiene rubber, isoprene rubber, ethylene-propylene-diene terpolymer (EPDM), polyorganosiloxane/polyalkyl(meth)acrylate rubber complex, and the like. These rubbery polymers may be used alone or in combination with one another.

In an exemplary embodiment, the rubber modified vinyl graft copolymer (B1) may be a copolymer prepared by graft-copolymering a monomer mixture comprising styrene, acrylonitrile, and selectively a (meth)acrylic acid alkyl ester, onto a butadiene rubber, or styrene/butadiene rubber.

In another exemplary embodiment, the rubber modified vinyl graft copolymer (B1) may be a copolymer prepared by graft-copolymering a (meth)acrylic acid methyl ester onto a butadiene rubber, or styrene/butadiene rubber.

The most preferable graft copolymer in the present invention is an ABS graft copolymer.

The rubber polymer may have an average particle size of 0.05∼4 µm, which can be useful to improve the impact resistance and the appearance of a molded article.

The graft copolymer can be prepared through a conventional polymerization process such as emulsion polymerization, suspension polymerization, solution polymerization, or bulk polymerization. Among these processes, emulsion or bulk polymerization can be useful, in which the vinyl monomers are added to the rubber polymer using an initiator.

### (B2) Vinyl Copolymer

The vinyl copolymer (B2) of the present invention is a copolymer or mixtures thereof prepared by copolymerizing 50 to 95 % by weight of styrene, α-methylstyrene, halogen- or alkyl-substituted styrene, C₁-C₈ methacrylic acid alkyl ester, C₁-C₈ acrylic acid alkyl ester, or mixtures thereof, and 5 to 50 % by weight of acrylonitrile, methacrylonitrile, maleic anhydride, and C₁-C₄ alkyl- or phenyl N-substituted maleimide or mixtures thereof.

The C₁-C₈ methacrylic acid alkyl ester or the C₁-C₈ acrylic acid alkyl ester can be prepared by the reaction of a monohydric alcohol containing 1 to 8 carbon atoms with an acrylic acid or a methacrylic acid respectively. Examples of suitable acid alkyl esters include methacrylic acid methyl ester, methacrylic acid ethyl ester, acrylic acid methyl ester, acrylic acid ethyl ester, acrylic acid propyl ester, methacrylic acid propyl ester, and the like.

The vinyl copolymer (B2) can be produced as by-products when preparing the rubber modified vinyl graft copolymer (B1). The by-products are mostly produced when a large quantity of monomers are grafted onto a small amount of rubber polymer or when a chain transfer agent is used in excess. The amount of the vinyl copolymer (B2) to be used in this invention does not include the amount of the by-products that might be produced during preparation of the rubber modified vinyl graft copolymer (B1).

Examples of suitable vinyl copolymer (B2) can include those prepared from a monomer mixture of styrene, acrylonitrile, and optionally methacrylic acid methyl ester; a monomer mixture of α-methyl styrene, acrylonitrile, and optionally methacryl ic acid methyl ester; or a monomer mixture of styrene, α-methyl styrene acrylonitrile, and optionally methacrylic acid methyl ester.

The vinyl copolymer can be prepared by an emulsion, suspension, solution, or bulk process, and can have a weight average molecular weight (M_{w}) of 15,000 to 200,000.

Yet another suitable vinyl copolymer (B2) can include a copolymer of styrene and maleic anhydride, which can be prepared by a continuous bulk process and a solution process. The maleic anhydride can be used in the amount of 5 to 50 % by weight. The copolymer of styrene and maleic anhydride can have a weight average molecular weight (M_{w}) of 20,000 to 200,000 and an intrinsic viscosity of 0.3 to 0.9 dl/g.

The styrene monomer for preparation of the vinyl copolymers (B2) in this invention can be replaced by p-methylstyrene, vinyltoluene, 2,4-dimethylstyrene, or α-methylstyrene.

### (C) (Meth)acrylic polymer Resin

The (meth)acrylic polymer resin (C) is a homopolymer of aromatic methacrylates or a copolymer of an aromatic methacrylate and a mono-functional unsaturated monomer.

The aromatic methacrylate is represented by the following Chemical Formula 1 or Chemical Formula 2. 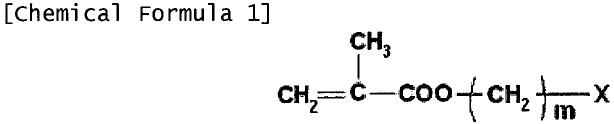 (wherein m is an integer from 0 to 10, and x is selected from the group consisting of a phenyl group, a methyl phenyl group, a methyl ethyl phenyl group, a methoxyphenyl group, a cyclohexylphenyl group, a chlorophenyl group, a bromophenyl group, phenylphenyl group, and benzylphenyl group.) 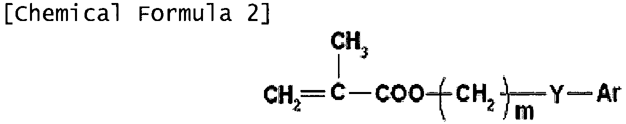 (wherein m is an integer from 0 to 10, Y is oxygen(O) or sulfur(s), and Ar is selected from the group consi sti ng of a phenyl group, a methyl phenyl group, a methyl ethyl phenyl group, a methoxyphenyl group, a cyclohexylphenyl group, a chlorophenyl group, a bromophenyl group, phenylphenyl group, and benzylphenyl group.)

Examples of the aromatic methacrylate may include, but are not limited to, 2-ethylphenoxy methacrylate, 2-ethylthiophenyl methacrylate, phenyl methacrylate, benzyl methacrylate, 2-phenylethyl methacrylate, 3-phenylpropyl methacrylate, 4-phenylbutyl methacrylate, 2-2-methylphenylethyl methacrylate, 2-3-methylphenylethyl methacrylate, 2-4-methylphenylethyl methacrylate, 2-(4-propylphenyl)ethyl methacrylate, 2-(4-(1-methylethyl)phenyl)ethyl methacrylate, 2-(4-methoxyphenyl)ethyl methacrylate, 2-(4-cyclohexylphenyl)ethyl methacrylate, 2-(2-chlorophenyl)ethyl methacrylate, 2-(3-chlorophenyl)ethyl methacrylate, 2-(4-chlorophenyl)ethyl methacrylate, 2-(4-bromophenyl)ethyl methacrylate, 2-(3-phenylphenyl)ethyl methacrylate, and 2-(4-benzylphenyl)ethyl methacrylate. These are used alone or in combination with one another.

The mono-functional unsaturated monomers may be, without limitation, (meth)acrylic acid esters, acrylic acid esters; acid anhydrides; hydroxyl group containing esters; amides; unsaturated nitrites; allyl glycidyl ethers; glycidyl methacrylates; aromatic vinyl monomers, and the like. In some exemplary embodiments, the mono-functional unsaturated monomer may be methacrylic acid ester monomers including ethyl methacrylate, propyl methacrylate, butyl methacrylate; acrylic acid ester monomers including methyl acryl ate, ethyl acrylate, propyl acryl ate, butyl acryl ate, and 2-ethyl hexyl acrylate; unsaturated carboxylic acid monomers including acrylic acid and methacrylic acid; acid anhydride monomers including maleic anhydride; hydroxyl group containing ester monomers including 2-hydroxyethyl acrylate, 2-hydroxypropyl acrylate, and monoglycerol acrylate; amide monomers including acryl amide and methacryl amide; nitrile monomers including acrylonitrile and methacrylonitrile; allyl glycidyl ethers; glycidyl methacrylates; styrenic monomers including styrene and α-methyl styrene, and the like. These may be used alone or in combination with one another.

The (meth)acrylic polymer resin (C) is prepared by copolymerizing 20 to 100 % by weight of the aromatic methacrylate and 0 to 80 % by weight of the mono-functional unsaturated monomer. If the amount of the aromatic methacrylate is less than 20 % by weight, the (meth)acrylic polymer resin may have an average refractive index of less than about 1.50. In another exemplary embodiment, the (meth)acrylic polymer resin (C) may be prepared by copolymerizing 50 to 90 % by weight of the aromatic methacrylate and 10 to 50 % by weight of the mono-functional unsaturated monomer. In other exemplary embodiment, the (meth)acrylic polymer resin (C) may be prepared by copolymerizing 60 to 80 % by weight of the aromatic methacrylate and 20 to 40 % by weight of the mono-functional unsaturated monomer.

The (meth)acryl i c polymer resin may be prepared by conventional methods such as bulk polymerization, emulsion polymerization, and suspension polymerization.

The (meth)acrylic polymer resin (C) of the present invention has a higher refractive index than that of conventional (meth)acrylic polymers. The (meth)acrylic polymer resin with high refractive index is prepared to have a refractive index of 1. 50 to 1. 59, whereas conventional polycarbonate resi ns have a refractive index of about 1. 59 and polymethylmethacrylate has a refractive index of about 1.49. In an exemplary embodiment, the (meth)acrylic polymer resin (C) may have a refractive index of 1.52 to 1.58, while in some exemplary embodiments, the (meth)acrylic polymer resin may have a refractive index of 1.53 to 1.575.

As the (meth)acrylic polymer resin (c) of the present invention has a hi gh refractive index, thereby decreasi ng the di fference from the refractive index of the polycarbonate resin, it is possible to obtain a resin composition having good transparency, when it is blended with polycarbonate resin.

when a mixture of the (meth)acrylic polymer resin (C) and the (meth)acrylic resin (E) is blended with the polycarbonate resin (A), the difference between the refractive index of the (meth)acrylic resin (E) and the refractive index of the polycarbonate may be lowered due to the increased refractive index of the (meth)acrylic polymer resin (C). Therefore, it is possi bl e to prevent the deterioration of transparency and colorability usually occurring in a conventional mixture of the (meth)acrylic resin (E) and a polycarbonate resin (A) due to the difference between the refractive index of the two resins.

The (meth)acrylic polymer resin (C) may have a weight average mol ecul ar weight of 5,000 to 300,000. In an exemplary embodiment, the (meth)acrylic polymer resin (C) may have a weight average molecular weight of 100,000 to 250,000 or 110,000 to 200,000. In another exemplary embodiment, the (meth)acrylic polymer resin (C) may have a weight average molecular weight of 10, 000 to 70, 000 g/mol. In another exemplary embodiment, the (meth)acrylic polymer resin (c) may have a weight average molecular weight of 5,000 to 10,000 g/mol.

The (meth)acrylic polymer resin (C) is used in an amount of 1 to 50 parts by weight, preferably 5 to 40 parts by weight, more preferably 10 to 35 parts by weight.

### (D) Flame retardant

The flame retardant of the present invention may be at least one selected from phosphorus-containing flame retardants, halogen-containing flame retardants, and inorganic flame retardants, without limitation.

In an exemplary embodiment, the flame retardant may be a phosphorus-containing flame retardant. Examples of the phosphorous-containing flame retardants may include, but are not limited to, phosphate, phosphonate,phosphinate,phosphine oxide,phosphazene,a metalsalt thereof, and the like.

The phosphate may be an aromatic phosphoric ester compound represented by the following chemical Formula 3: 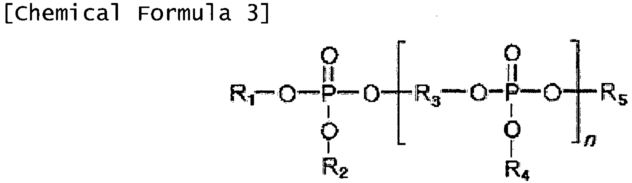 (wherein R₁, R₂, R₄, and R₅ are independently C₆∼C₂₁₀ aryl group or C₁∼C₁₂ alkyl substituted aryl group; R₃ is a derivative of dialcohols such as resorcinol, hydroquinol, bisphenol-A, bisphenol-S and the like; and n is 0∼5).

Preferably, R₁, R₂, R₄, and R₅ are independently a phenyl group or a phenyl group substituted with an alkyl group such as methyl, ethyl, isopropyl, t-butyl, isobutyl, isoamyl, t-amyl, etc. More preferably, R₁, R₂, R₄, and R₅ are independently a phenyl group or a phenyl group substituted with methyl, ethyl, isopropyl, or t-butyl.

In an exemplary embodiment, the aromatic phosphoric ester compound represented by the chemical Formula 3 may be a monomer or oligomer having an average value of n of 0∼3. In an exemplary embodiment, a phosphoric ester compound having n of 0, 1, 2, and 3 can be used alone or in combination with one another.

In another exemplary embodiment, the aromatic phosphoric ester compound may be usedincombination with other phosphorus-contai ni ng flame retardants.

In another exemplary embodiment, the flame retardant may be a conventional halogen-containing flame retardant. Examples of the halogen-containing flame retardant may include, without limitation, decabromo diphenylether, decabromo diphenylethane, tetrabromo bisphenol A, tetrabromo bisphenol A-epoxy oligomer, octabromo trimethylphenyl phosphate, ethylene bistetrabromophthalimide, tris (tribromophenol)triazine, brominated polystyrene, and the like. In some exemplary embodiments, a halogen-containing compound which is able to melt at conventional process temperatures, for example, a halogen-containing compound having a melting point or a softening point under about 250°C may be preferred.

In some exemplary embodiments, when the halogen-containing compound is applied, inorganic compounds such as antimony trioxide and antimony pentoxide may be used together depending on its use.

The flame retardant (D) is used in amount of 0.1 to 40 parts by weight, preferably 1 to 30 parts by weight, more preferably 10 to 25 parts by weight, per 100 parts by weight of a base resin.

### (E) (Meth)acrylic resin

The resin composition of the present invention may optionally further comprise a (meth)acrylic resin (E). The (meth)acrylic resin (E) may be a polymer or a copolymer of one or more of C₁₋₈ -alkyl (meth)acrylic monomers, or a mixture thereof. In addition, the (meth)acrylic resin may have a linear structure.

Examples of the (meth) acryl i c monomer may include, but are not limited to, methyl methacrylate, ethyl methacrylate, n-propyl methacrylate, n-butyl methacrylate, methyl acrylate, ethyl acrylate, propyl acrylate, butyl acrylate, 2-ethylhexyl acrylate, 2-ethylhexyl methacrylate, and the like. These (meth)acrylic monomers may be used alone or in combination with one another.

The (meth)acrylic resin (E) may be prepared by conventional methods such as bulk polymerization, emulsion polymerization, and suspension polymerization.

Further, the (meth)acrylic resin may be a homopolymer or a copolymer of two types or more of (meth)acrylic monomers, or mixtures thereof.

The (meth)acrylic resin (E) may be used in an amount of about 50 parts by weight or less, whi ch may be added to (A) polycarbonate resin, (B) copolymer resin, and (C) (meth)acrylic copolymer resin. In an exemplary embodiment, the (meth)acrylic resin (E) may be used in an amount of 1 to 35 parts by weight. In another exemplary embodiment, the (meth)acrylic resin (E) may be used in an amount of 5 to 20 parts by weight.

The thermoplastic resin composition may further comprise additives such as surfactants, nucleating agents, coupling agents, fillers, plasticizers, impact modifiers, antimicrobials, releasing agents, thermal stabilizers, antioxidants, light stabilizers, compatibilizer, inorganic fillers, coloring agents, stabilizers, lubricants, antistatic agents, pigments, dyes, flameproof agents, and the like. These additives may be used alone or in combination with one another.

The resin composition of the present invention may be prepared by conventional methods. For example, the aforementioned components and other additives may be mixed in a mixer together and the mixture may be melt-extruded through a conventional extruder in a pellet form, and then the resin pellets may be used to prepare plastic mol ded articles by injection and extrusion.

since the thermoplastic resin composition has excellent scratch resistance, colorability, and transparency, the thermoplastic resin composition may be molded into various articles such as housings or parts of electrical and electronic goods, parts of automobiles, lenses, window glasses, and the like.

In some exemplary embodiments, the scratch-resistant thermoplastic resin composition may be used in housings of electrical and electronic products such as TV, audio sets, washing machines, cassette players, MP3, telephones, game devices, video players, computers, photocopiers, and the like.

In another exemplary embodiment, the scratch-resistant thermoplastic resin composition may be used for internal or external parts of automobiles such as dashboard panels, instrumental panels, door panels, quarter panels, wheel covers, and the like.

The molding methods may be, but are not limited to, extrusion, injection, or casting molding, and may be easily carried out by those skilled in the art.

The invention may be better understood by reference to the following examples which are intended for the purpose of illustration and are not to be construed as in any way limiting the scope of the present invention, which is defined in the claims appended hereto.

### [Mode for Invention]

### Example

### (A) Polycarbonate resin

Bisphenol-A linear polycarbonate with a weight average molecular weight of 25,000 (M_{w}) manufactured by Teijin Chemicals Ltd. of Japan (product name: PANLITE L-1250 WP) was used.

### (B) Copolymer resin

### (B1) ABS graft copolymer resin

45 parts of polybutadiene rubber latex (solid content), 39 parts by weight of styrene, 16 parts by weight of acrylonitrile and 150 parts by weight of deionized water were mixed. To the mixture, 1.0 part by weight of potassi um oleate, 0.4 parts by weight of cumenhydroperoxi de, and 0.3 parts by weight of t-dodecyl mercaptan chain transfer agent were added. The blend was kept at 75 °C for 5 hours to obtain an ABS graft copolymer (g-ABS) latex. To the g-ABS latex, 1% sulfuric acid solution was added, coagulated and dried to obtain a graft copolymer resin (g-ABS) in powder form.

### (B2) SAN copolymer resin

76 parts by weight of styrene, 24 parts by weight of acrylonitrile, and 120 parts of deionized water were mixed. To the mixture, 0.17 parts by weight of azobisisobutylonitrile (AIBN), 0.4 parts by weight of t-dodecyl mercaptan chain transfer agent, and 0.5 parts by weight of tricalciumphosphate were added. The mixture was suspension polymerized at 75°C for 5 hours, and a styrene-acrylonitrile (SAN) copolymer resin was obtained. The resultant copolymer was washed, dehydrated and dried to obtain SAN copolymer resin having a weight average molecular weight of 150,000 g/mol in powder form.

### (C) (Meth)acrylic copolymer resin with high refractive index

### (C1) (Meth)acrylic copolymer with high refractive index-1

The (meth)acrylic copolymer with high refractive index was prepared by suspensi on polymerizing 30 parts by weight of a methylmethacrylate monomer and 70 parts by weight of phenyl methacrylate with a refractive index of 1.570. The resulting copolymer has a refractive index of 1.546 and a weight average molecular weight of 120,000 g/mol.

### (C2) (Meth)acrylic copolymer with high refractive index-2

The (meth)acrylic copolymer with high refractive index was prepared by suspension polymerizing 50 parts by weight of a methyl methacryl ate monomer and 50 parts by weight of phenyl methacrylate with a refractive index of 1.570. The resulting copolymer has a refractive index of 1.530 and a weight average molecular weight of 120,000 g/mol.

### (D) Flame retardant

Bisphenol A diphosphate manufactured by Daihachi Chemical Industry Co., Ltd. of Japan (product name: CR-741) was used.

### (E) (Meth)acrylic resin

Polymethylmethacrylate resin with a weight average molecular weight of 92,000 (M_{w}) manufactured by LG MMA Ltd. of South Korea (product name: L84) was used.

### Examples 1∼5

The components as shown in Table 1 were added to a conventional mixer, and the mixture was extruded through a conventional twin screw extruder (L/D=29, Φ=45mm) to prepare a product in pellet form. The pellets were dried at 80°c for 6 hours and then molded into test specimens using 6 oz injection molding machine.

### Comparative Examples 1~3

comparative Example 1 was conducted in the same manner as in the Example 1 except that the (meth)acrylic copolymer resin (C) of the present invention was not used.

Comparative Example 2 was conducted in the same manner as in the Example 1 except that (meth)acrylic resin (E) instead of the (meth)acrylic copolymer resin (C) was used.

comparative Example 3 was conducted in the same manner as in the Example 5 except that (meth)acrylic resin (E) instead of the (meth)acrylic copolymer resin (C) was used.

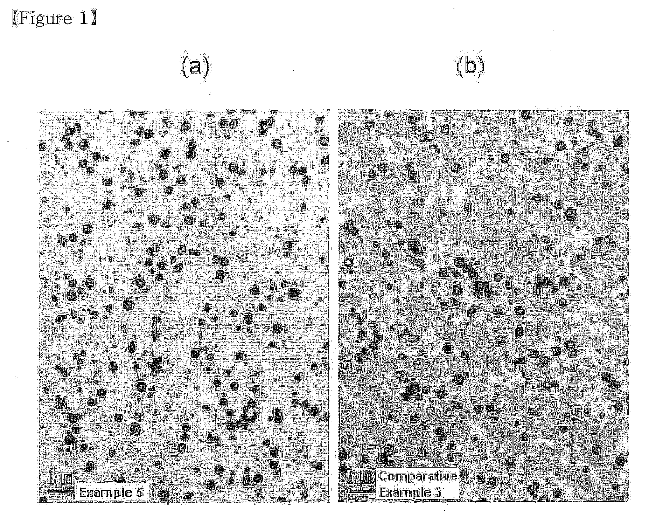

The improved compatibility was confirmed by phase separation behavior through TEM images. The test specimen with dimensions of L 90 mm x w 50 mm x T 2.5 mm was used for measuring the above appearance properties. On the other hand, in order to analyze phase division behavior, TEM images of resin compositions of Example 5 and Comparative Example 3 were respectively shown in FIGS. 1(a) and 1(b). Although Comparative Example 3 exhibits a polymethylmethacrylate continuous phase and large domain In a polycarbonate base due to lowered compatibility, Example 5 exhibits improved compatibility since phase division of polymethylmethacrylate is not shown and homogenous phase with polycarbonate is shown.
(1) The compatibility and the transparency of the resin composition were estimated by measuring flow mark, transparency, color and transmiittance. The flow mark, transparency and color appeared on the test specimen were measured by naked eyes.
(2) Flexural Modulus: The flexural modulus was measured in accordance with ASTM D790.
(3) Flame Retardancy: The flame retardancy was measured in accordance with UL 94v using a 2.5 mm thick test specimen.
(4) scratch resistance: The scratch resistance was measured by ball-type scratch profile (BSP) test. The BSP was conducted by applying a scratch of a length of 10 to 20 mm onto resin specimens with dimensions of L 90 mm x w 50 mm x T 2.5 mm at load of 1,000 g and a scratch speed of 75 mm/min, using a metal spherical tip with a diameter of 0.7 mm and measuring a profile of the applied scratch through a surface profile analyzer (XP-I) manufactured by Ambios corporation which provides a scratch profile through surface scanning using a metal stylus tip with a diameter of 1∼2 µm. The scratch resistance was evaluated from a scratch width by the measured profile.

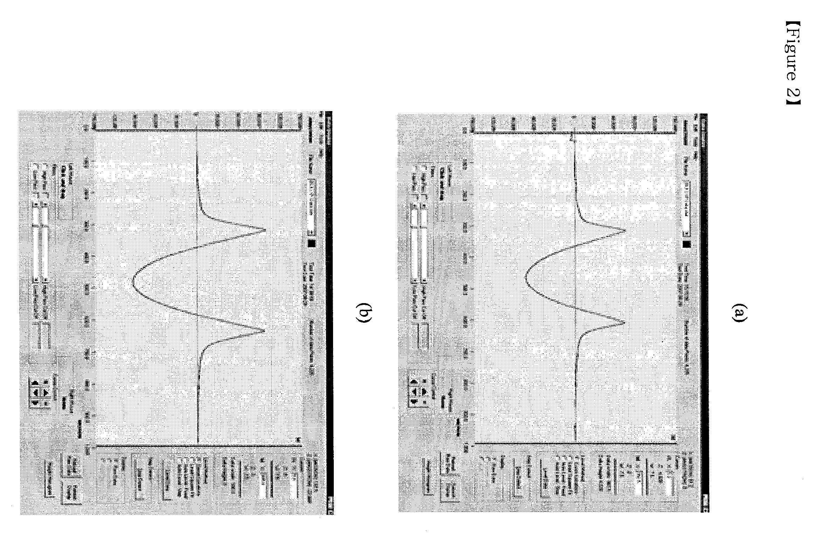

FIG. 2(a) was a scratch profile picture of a test specimen prepared in Example 1 measured by BSP test, and FIG 2(b) was a scratch profile picture of a test specimen prepared in comparative Example 1.

**[Table 1]**

| | | Examples | | | | | Comparative Examples | | |
|---|---|---|---|---|---|---|---|---|---|
| | | 1 | 2 | 3 | 4 | 5 | 1 | 2 | 3 |
| (A)PC | | 58.4 | 58.4 | 58.4 | 58.4 | 51.1 | 73 | 58.4 | 51.1 |
| (B) | (B1)ABS | 11.2 | 11.2 | 11.2 | 11.2 | 9.8 | 14 | 11.2 | 9.8 |
| | (B2)SAN | 10.4 | 10.4 | 10.4 | 10.4 | 9.1 | 13 | 10.4 | 9.1 |
| (C) | (C1) | 20 | - | 10 | - | 30 | - | - | - |
| | (C2) | - | 20 | - | 10 | - | - | - | - |
| (D)Flame Retardant | | 18 | 18 | 18 | 18 | 18 | 18 | 18 | 18 |
| (E)Acrylic Resin | | - | - | 10 | 10 | - | - | 20 | 30 |
| Flow Mark | | x | X | X | X | X | X | O | O |
| Color(Opaque Milky presence) | | white | white | white | white | white | white | Opaque milky | Opaque milky |
| Flexural Modulus | | 26010 | 25970 | 25835 | 25660 | 26570 | 25130 | 25470 | 25730 |
| Flame Retardancy | UL94 (2.5mm) | V0 | V0 | V0 | V0 | V0 | V0 | V0 | V0 |
| BSP | Width (µm) | 292 | 290 | 288 | 286 | 277 | 316 | 289 | 275 |

As shown in Table 1, the resin compositions in Examples 1 to 5 and Comparative Examples 2∼3 employing (meth)acrylic copolymer resin (C) or (meth)acrylic resin (E) exhibit improved scratch resistance as compared with Comparative Example 1, which is also confirmed by the scratch profile (FIG. 2). With respect to flame retardancy, all resin compositions exhibit flame retardancy of v0 or v1 measured in accordance with UL94.

Although comparative Examples 2 and 3 in which (meth)acrylic resin (E) was used instead of (meth)acrylic copolymer resin (C) show better scratch resistance than Comparative Example 1 using neither (meth)acrylic resin (E) nor (meth)acrylic copolymer resin (C), they show flow mark and opaque appearance due to low compatibility between the resins. The resin compositions in Examples 1 to 5 using the (meth)acrylic copolymer resin (C) do not exhibit flow mark or Opaque Milky appearance due to improved compatibility and refractive index. Thus, good appearance as well as high colorability can be obtained.

Further, Example 1 using (meth)acrylic copolymer resin (c) with higher refractive index exhibits better compatibility compared to Example 2. Although resin compositions not using the (meth)acrylic resin (E) exhibit better compatibility compared to the resin compositions using both (meth)acrylic copolymer resin (C) and (meth)acrylic resin (E), the resin compositions in Examples 3 to 4 using (meth)acrylic copolymer resin (C) and (meth)acrylic resin (E) together also show improved compatibility, because average refractive index of (meth)acrylic resin is increased.

In the above, the present invention was descri bed based on the speci fi c preferred embodiments, but it should be apparent to those ordinarily skilled in the art that various changes and modifications can be added without departing from the spirit and scope of the present invention which will be defined in the appended claims.

## Claims

1. A flame-retardant scratch-resistant thermoplastic resin composition comprising:
(A) 20 to 95 parts by weight of a polycarbonate resin;
(B) 1 to 50 parts by weight of a copolymer resin comprising (B1) 10 to 60 % by weight of a rubber modified vinyl graft copolymer resin and (B2) 40 to 90 % by weight of a vinyl copolymer resin,
wherein said rubber modified vinyl graft copolymer resin (B1) is a copolymer or mixtures thereof obtained by graft polymerizing 50 to 95 % by weight of an aromatic vinyl compound, C₁-C₈ (meth)acrylic acid alkyl ester compound, or mixtures thereof and 5 to 95 % by weight of a vinyl cyanide compound, C₁-C₈ (meth)acrylic acid alkyl ester compound, maleic anhydride, C₁-C₄ alkyl- or phenyl N-substituted maleimide, or mixtures thereof, onto about 5 to about 95 % by weight of rubbery polymer selected from butadiene rubber, ethylene/propylene rubber, styrene/butadiene rubber, acrylonitrile/butadiene rubber, isoprene rubber, ethylene-propylene-diene terpolymer (EPDM), polyorganosiloxane/polyalkyl(meth)acrylate rubber complex or combinations thereof, and
wherein said vinyl copolymer (B2) is a copolymer or mixtures thereof prepared by copolymerising 50 to 95 % by weight of a styrene, α-methylstyrene, halogen- or alkyl-substituted styrene, C₁-C₈ methacrylic acid alkyl ester, C₁-C₈ acrylic acid alkyl ester, or mixtures thereof, and 5 to 50 % by weight of acrylonitrile, methacrylonitrile, maleic anhydride, C₁-C₄ alkyl- or phenyl N-substituted maleimide, or mixtures thereof;
(C) 1 to 50 parts by weight of a (meth)acrylic polymer resin with a refractive index of 1.50 to 1.59; wherein said (meth)acrylic polymer resin (C) comprises 20 to 100 % by weight of an aromatic methacrylate represented by the following Chemical Formula 1 or Chemical Formula 2 and 0 to 80 % by weight of a mono-functional unsaturated monomer: 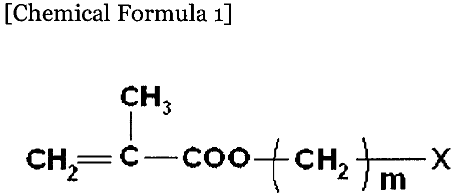 (wherein m is an integer from 0 to 10, and X is selected from the group consisting of a phenyl group, a methylphenyl group, a methylethylphenyl group, a methoxyphenyl group, a cyclohexylphenyl group, a chlorophenyl group, a bromophenyl group, phenylphenyl group, and benzylphenyl group); 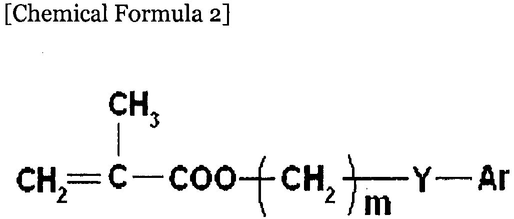 (wherein m is an integer from 0 to 10, Y is oxygen(O) or sulfur(S), and Ar is selected from the group consisting of a phenyl group, a methylphenyl group, a methylethylphenyl group, a methoxyphenyl group, a eyelohexylphenyl group, a chlorophenyl group, a bromophenyl group, phenylphenyl group, and benzylphenyl group); and
(D) 0.1- to 40 parts by weight of a flame retardant, per 100 parts by weight of a base resin comprising (A) + (B) + (C).

2. The thermoplastic resin composition of Claim 1, wherein said base resin further comprises less than about 50 parts by weight of a (meth)acrylic resin (E), wherein said (meth)acrylic resin (E) is a (co)polymer of (meth)acrylic monomers, or mixtures thereof selected from the group consisting of methyl methacrylate, ethyl methacrylate, n-propyl methacrylate, n-butyl methacrylate, methyl acrylate, ethyl acrylate, propyl acrylate, butyl acrylate, 2-ethylhexyl acrylate, 2-ethylhexyl methacrylate, and mixtures thereof.

3. The thermoplastic resin composition of Claim 1, wherein said mono-functional unsaturated monomer is at least one monomer selected from the group consisting of methacrylic acid ester monomers including methyl methacrylate, ethyl methacrylate, propyl methacrylate, butyl methacrylate; acrylic acid ester monomers including methyl acrylate, ethyl acrylate, propyl acrylate, butyl acrylate, and 2-ethyl hexyl acrylate; unsaturated carboxylic acid monomers including acrylic acid and methacrylic acid; acid anhydride monomers including maleic anhydride; hydroxyl group containing ester monomers including 2-hydroxyethyl acrylate, 2-hydroxypropyl acrylate, and monoglycerol acrylate; amide monomers including acryl amide and methacryl amide; nitrile monomers including acrylonitrile and methacrylonitrile; allyl glycidyl ethers; glycidyl methacrylates; and styrenic monomers including styrene and α-methyl styrene.

4. The thermoplastic resin composition of Claim 1, wherein said (meth)acrylic polymer resin (C) has a weight average molecular weight of 5,000 to 300,000.

5. The thermoplastic resin composition of Claim 1, wherein said flame retardant (D) is at least one flame retardant selected from a phosphorus-containing flame retardant, a halogen-containing flame retardant, and an inorganic flame retardant.

6. The thermoplastic resin composition of Claim 1, wherein said resin composition further comprises at least one additive selected from the group consisting of surfactants, nucleating agents, coupling agents, fillers, plasticizers, impact modifiers, antimicrobials, releasing agents, thermal stabilizers, antioxidants, light stabilizers, compatibilizers, inorganic fillers, coloring agents, stabilizers, lubricants, antistatic agents, pigments, dyes, and flameproof agents.

7. A molded article produced from the resin composition as defined in any one of Claims 1-6.

## Patentansprüche

1. Flammhemmende kratzfeste thermoplastische Harzzusammensetzung, umfassend:
(A) 20 bis 95 Gewichtsteile eines Polycarbonatharzes;
(B) 1 bis 50 Gewichtsteile eines Copolymerharzes, umfassend (B1) 10 bis 60 Gewichts-% eines kautschukmodifizierten Vinyl-Pfropf-Copolymer-Harzes und (B2) 40 bis 90 Gewichts-% eines Vinyl-Copolymer-Harzes,
wobei das kautschukmodifizierte Vinyl-Pfropf-Copolymerharz (B1) ein Copolymer oder Gemische davon ist, erhalten durch Pfropfpolymerisieren von 50 bis 95 Gewichts-% einer aromatischen Vinylverbindung, C₁-C₈-(Meth)acrylsäurealkylesterverbindung, oder Gemischen davon, und 5 bis 95 Gewichts-% einer Vinylcyanidverbindung, C₁-C₈-(Meth)acrylsäurealkylesterverbindung, Maleinsäureanhydrid, C₁-C₄-Alkyl- oder Phenyl-N-substituiertem Maleimid, oder Gemischen davon, auf etwa 5 bis etwa 95 Gewichts-% eines Kautschukpolymers ausgewählt aus Butadienkautschuk, Ethylen/Propylen-Kautschuk, Styrol/Butadien-Kautschuk, Acrylnitril/Butadien-Katuschuk, Isopren-Kautschuk, Ethylen-Propylen-Dien-Terpolymer (EPDM), Polyorganosiloxan/Polyalkyl(meth)acrylat-Kautschuk-Komplex oder Kombinationen davon, und
wobei das Vinylcopolymer (B2) ein Copolymer oder Gemische davon ist, hergestellt durch Copolymerisieren von 50 bis 95 Gewichts-% eines Styrols, α-Methylstyrols, Halogen- oder Alkyl-substituierten Styrols, C₁-C₈-(Meth)acrylsäurealkylesters, C₁-C₈-Acrylsäurealkylesters, oder Gemischen davon und 5 bis 50 Gewichts-% Acrylnitril, Methacrylnitril, Maleinsäureanhydrid, C₁-C₄-Alkyl- oder Phenyl-N-substituiertem Maleimid, oder Gemischen davon;
(C) 1 bis 50 Gewichtsteilen eines (Meth)acrylat-Polymerharzes mit einem Brechungsindex von 1,50 bis 1,59; wobei das (Meth)acrylsäure-Polymerharz (C) 20 bis 100 Gewichts-% eines aromatischen Methacrylats, dargestellt durch die folgende chemische Formel 1 oder chemische Formel 2, und 0 bis 80 Gewichts-% eines monofunktionellen ungesättigten Monomers umfasst: 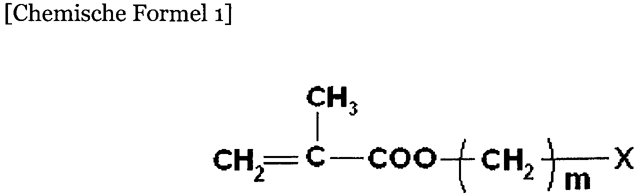 (wobei m eine ganze Zahl von 0 bis 10 ist, und X ausgewählt ist aus der Gruppe bestehend aus einer Phenylgruppe, einer Methylphenylgruppe, einer Methylethylphenylgruppe, einer Methoxyphenylgruppe, einer Cyclohexyl-phenylgruppe, einer Chlorphenylgruppe, einer Bromphenylgruppe, einer Phenylphenylgruppe, und einer Benzylphenylgruppe); 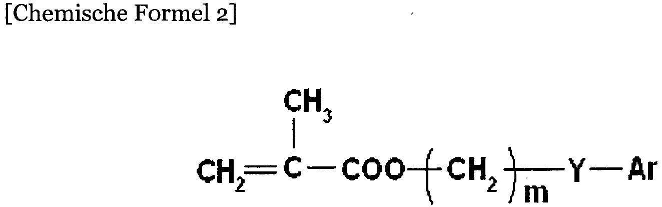 (wobei m eine ganze Zahl von 0 bis 10 ist, Y Sauerstoff (O) oder Schwefel (S) ist, und Ar ausgewählt ist aus der Gruppe bestehend aus einer Phenylgruppe, einer Methylphenylgruppe, einer Methylethylphenylgruppe, einer Methoxyphenylgruppe, einer Cyclohexylphenylgruppe, einer Chlorphenylgruppe, einer Bromphenylgruppe, einer Phenylphenylgruppe, und einer Benzylphenylgruppe);
und
(D) 0,1 bis 40 Gewichtsteile eines Flammschutzmittels, auf 100 Gewichtsteile eines Basisharzes umfassend (A) + (B) + (C).

2. Thermoplastische Harzzusammensetzung nach Anspruch 1, wobei das Basisharz weiterhin weniger als etwa 50 Gewichtsteile eines (Meth)acrylatharzes (E) umfasst, wobei das (Meth)acrylatharz (E) ein (Co)polymer von (Meth)acrylatmonomeren, oder Gemischen davon ist, ausgewählt aus der Gruppe bestehend aus Methylmethacrylat, Ethylmethacrylat, n-Propylmethacrylat, n-Butylmethacrylat, Methylacrylat, Ethylacrylat, Proplyacrylat, Butylacrylat, 2-Ethylhexylacrylat, 2-Ethylhexylmethacrylat, und Gemischen davon.

3. Thermoplastische Harzzusammensetzung nach Anspruch 1, wobei das monofunktionelle ungesättigte Monomer wenigstens ein Monomer ist, ausgewählt aus der Gruppe bestehend aus Methacrylsäureestermonomeren einschließlich Methylmethacrylat, Ethylmethacrylat, Propylmethacrylat, Butylmethacrylat; Acrylsäureestermonomeren einschließlich Methylacrylat, Ethylacrylat, Proplyacrylat, Butylacrylat, und 2-Ethylhexylacrylat; ungesättigten Carbonsäuremonomeren, einschließlich Acrylsäure und Methacrylsäure; Säureanhydridmonomeren, einschließlich Maleinsäureanhydrid; Hydroxylgruppe enthaltenden Estermonomeren, einschließlich 2-Hydroxyethylacrylat, 2-Hydroxypropylacrylat, und Monoglycerinacrylat; Amidmonomeren einschließlich Acrylamid und Methacrylamid; Nitrilmonomeren einschließlich Acrylnitril und Methacrylnitril; Allylglycidylethern; Glycidylmethacrylaten; und Styrolmonomeren, einschließlich Styrol und α-Methylstyrol.

4. Thermoplastische Harzzusammensetzung nach Anspruch 1, wobei das (Meth)acrylat-Polymerharz (C) ein gewichtsgemitteltes Molekulargewicht von 5.000 bis 300.000 aufweist.

5. Thermoplastische Harzzusammensetzung nach Anspruch 1, wobei das Flammschutzmittel (D) wenigstens ein Flammschutzmittel ist, ausgewählt aus einem phosphorhaltigen Flammschutzmittel, einem halogenhaltigen Flammschutzmittel, und einem anorganischen Flammschutzmittel.

6. Thermoplastische Harzzusammensetzung nach Anspruch 1, wobei die Harzusammensetzung weiterhin wenigstens ein Additiv umfasst, ausgewählt aus der Gruppe bestehend aus oberflächenaktiven Mitteln, Nukleierungsmitteln, Kupplungsmitteln, Füllstoffen, Plastifikatoren bzw. Weichmachern, Schlagfestmodifikatoren, antimikrobiellen Mitteln, Trennmitteln, thermischen Stabilisatoren, Antioxidationsmitteln, Lichtstabilisatoren, Verträglichkeitsmachern, anorganischen Füllstoffen, Färbemitteln, Stabilisatoren, Schmiermitteln bzw. Gleitmitteln, antistatischen Mitteln, Pigmenten, Farbstoffen, und Feuerbeständigkeitsmitteln.

7. Formgegenstand, hergestellt aus der Harzzusammensetzung wie in irgendeinem der Ansprüche 1 bis 6 definiert.

## Revendications

1. Composition de résine thermoplastique retardatrice de flamme, résistante à la rayure, comprenant :
(A) 20 à 95 parties en poids d'une résine de polycarbonate ;
(B) 1 à 50 parties en poids d'une résine de copolymère comprenant (B1) de 10 à 60 % en poids d'une résine d'un copolymère greffé vinylique modifié par un caoutchouc, et (B2) de 40 à 90 % en poids d'une résine de copolymère vinylique,
dans laquelle ladite résine d'un copolymère greffé vinylique modifié par un caoutchouc (B1) est un copolymère, ou un mélange de copolymères, obtenu par polymérisation par greffage de 50 à 95 % en poids d'un composé vinylaromatique, d'un composé ester alkylique en C₁-C₈ de l'acide (méth) acrylique ou de mélanges de ceux-ci, et de 5 à 95 % en poids d'un composé cyanure de vinyle, d'un composé ester alkylique en C₁-C₈ de l'acide (méth)acrylique, d'anhydride maléique, de maléimide N-substitué à substitution alkyle en C₁-C₄ ou phényle, ou de mélanges de ceux-ci, sur environ 5 à environ 95 % en poids d'un polymère caoutchouteux choisi parmi le caoutchouc butadiène, le caoutchouc éthylène/propylène, le caoutchouc styrène/butadiène, le caoutchouc acrylonitrile/butadiène, le caoutchouc isoprène, le terpolymère éthylène-propylène-diène (EPDM), le complexe polyorganosiloxane/caoutchouc de poly((méth)acrylate d'alkyle), ou les combinaisons de ceux-ci, et
dans laquelle ledit copolymère vinylique (B2) est un copolymère, ou un mélange de copolymères, préparé par copolymérisation de 50 à 95 % en poids d'un styrène, d'α-méthylstyrène, d'un styrène à substitution halogéno ou alkyle, d'un ester alkylique en C₁-C₈ de l'acide méthacrylique, d'un ester alkylique en C₁-C₈ de l'acide méthacrylique ou de mélanges de ceux-ci, et de 5 à 50 % en poids d'acrylonitrile, de méthacrylonitrile, d'anhydride maléique, de maléimide N-substitué à substitution alkyle en C₁-C₄ ou phényle, ou de mélanges de ceux-ci ;
(C) 1 à 50 parties en poids d'une résine d'un polymère (méth)acrylique ayant un indice de réfraction de 1,50 à 1,59 ; ladite résine d'un polymère (méth) acrylique (C) comprenant de 20 à 100 % en poids d'un méthacrylate aromatique représenté par la Formule Chimique 1 ou la Formule Chimique 2 ci-après, et 0 à 80 % en poids d'un monomère insaturé monofonctionnel : 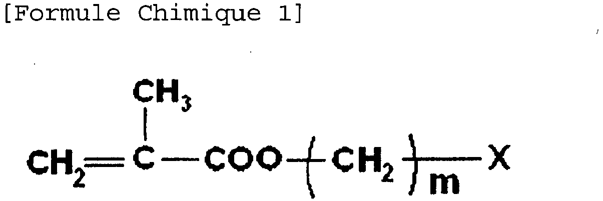 (où m est un entier de 0 10, et X est choisi dans le groupe consistant en un groupe phényle, un groupe méthylphényle, un groupe méthyléthylphényle, un groupe méthoxyphényle, un groupe cyclohexylphényle, un groupe chlorophényle, un groupe bromophényle, un groupe phénylphényle et un groupe benzylphényle) ; 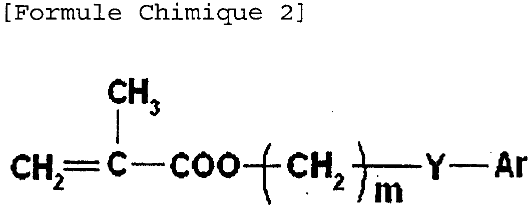 (où m est un entier de 0 à 10, Y est un atome d'oxygène (O) ou de soufre (S), et Ar est choisi dans le groupe consistant en un groupe phényle, un groupe méthylphényle, un groupe méthyléthylphényle, un groupe méthoxyphényle, un groupe cyclohexylphényle, un groupe chlorophényle, un groupe bromophényle, un groupe phénylphényle et un groupe benzylphényle) ; et
(D) 0,1 à 40 parties en poids d'un retardateur de flamme, pour 100 parties en poids d'une résine de base comprenant (A) + (B) + (C).

2. Composition de résine thermoplastique selon la revendication 1, dans laquelle ladite résine de base comprend en outre moins d'environ 50 parties en poids d'une résine (méth)arylique (E), ladite résine (méth)acrylique (E) étant un (co)polymère de monomères (méth)acryliques ou des mélanges de ceux-ci, choisis dans le groupe consistant en le méthacrylate de méthyle, le méthacrylate d'éthyle, le méthacrylate de n-propyle, le méthacrylate de n-butyle, l'acrylate de méthyle, l'acrylate d'éthyle, l'acrylate de propyle, l'acrylate de butyle, l'acrylate de 2-éthylhexyle, le méthacrylate de 2-éthylhexyle et les mélanges de ceux-ci.

3. Composition de résine thermoplastique selon la revendication 1, dans laquelle ledit, monomère insaturé monofonctionnel est au moins un monomère choisi dans le groupe consistant en les esters monomères de l'acide méthacrylique, y compris le méthacrylate de méthyle, le méthacrylate d'éthyle, le méthacrylate de propyle, le méthacrylate de butyle ; les esters monomères de l'acide acrylique, y compris l'acrylate de méthyle, l'acrylate d'éthyle, l'acrylate de propyle, l'acrylate de butyle et l'acrylate de 2-éthylhexyle ; les acides carboxyliques insaturés monomères, y compris l'acide acrylique et l'acide méthacrylique ; les anhydrides d'acide monomères, y compris l'anhydride maléique ; les esters monomères contenant des groupes hydroxyle, y compris l'acrylate de 2-hydroxyéthyle, l'acrylate de 2-hydroxypropyle et l'acrylate de monoglycérol ; les amides monomères, y compris l'acrylamide et le méthacrylamide ; les nitriles monomères, y compris l'acrylonitrile et le méthacrylonitrile ; les allylglycidyléthers ; les méthacrylates de glycidyle ; et les monomères styréniques, y compris le styrène et l'α-méthylstyrène.

4. Composition de résine thermoplastique selon la revendication 1, dans laquelle ladite résine d'un polymère (méth)acrylique (C) a une masse moléculaire moyenne en masse de 5000 à 300 000.

5. Composition de résine thermoplastique selon la revendication 1, dans laquelle ledit retardateur de flamme (D) est au moins un retardateur de flamme choisi parmi un retardateur de flamme contenant du phosphore, un retardateur de flamme halogéné et un retardateur de flamme inorganique.

6. Composition de résine thermoplastique selon la revendication 1, ladite composition de résine comprenant en outre un additif choisi dans le groupe consistant en les tensioactifs, les agents de nucléation, les agents de couplage, les charges, les plastifiants, les modifiants choc, les antimicrobiens, les agents de démoulage, les stabilisants thermiques, les antioxydants, les photostabilisants, les agents de compatibilisation, les charges inorganiques, les agents colorants, les stabilisants, les lubrifiants, les agents antistatiques, les pigments, les colorants et les agents d'ignifugation.

7. Article moulé produit à partir de la composition de résine telle que définie dans l'une quelconque des revendications 1 à 6.
